# EUROPÄISCHE PATENTANMELDUNG

(11) **EP 0 695 586 A2**
(43) Veröffentlichungstag der Anmeldung: **07.02.1996**
(21) Anmeldenummer: 95810480.4
(22) Anmeldetag: 24.07.1995
(51) Int. Cl.: B07C 1/04

(54) **Vorrichtung zum Beschicken der Behälter eines Verteilerförderers**

(30) Priorität: 02.08.1994 CH 2413/94
(71) Anmelder: GRAPHA-HOLDING AG, CH-6052 Hergiswil (CH)
(72) Erfinder: Oppliger, Jean-Claude, CH-8155 Niederhasli (CH); Zimmermann, Thomas, D-79793 Wutöschingen (DE); Fritsche, Beat, CH-8606 Greifensee (CH)

(57) **Zusammenfassung**

Die Vorrichtung (1) dient zum getakteten Beschicken der Behälter (32) eines Verteilförderers (30) mit flachen Produkten (21). Sie weist ein endloses Rippenband (6) mit mehreren Fenstern (8) auf. Wenigstens ein Fenster (8) bildet in einer Position des Rippenbandes (6) mit einer Abdeckung (9) einen Schacht (40) in welchen ein Produkt (21) seitlich eingelegt werden kann. Während dem Einlegen eines Produktes (21) ruht das Rippenband (6) kurzfristig. Ist ein Produkt (21) auf dem entsprechenden Fenster (8) abgelegt, so wird dieses Produkt (21) durch eine Beschleunigung des Rippenbandes (6) schräg nach unten in einen Behälter (32) des Verteilförderers (30) abgeworfen.

## Beschreibung

Die Erfindung betrifft eine Vorrichtung zum Beschicken der Behälter eines Verteilförderers mit flachen Produkten, insbesondere Poststücken, mit einer vorzugsweise geneigten Ablagefläche und Mitteln, um ein auf diese gelegtes Produkt getaktet in einen Behälter zu fördern.
Eine Vorrichtung dieser Art ist im Stand der Technik durch die EP - A - 0 519 375 bekannt geworden. Diese Druckschrift zeigt in Figur 10 eine solche Vorrichtung, die am unteren Ende der geneigt angeordneten Ablagefläche eine wegschwenkbare Klappe aufweist. Über der Klappe ist eine drehbare Rolle gelagert, die in eine Öffnung der Ablagefläche eingreift und zum Fassen eines Poststückes mit einer Klemmrolle zusammenarbeitet, die unter Federdruck schwenkbar an die angetriebene Rolle anlegbar ist. Bei zurückgeschwenkter Klappe kann ein zwischen den Rollen festgehaltenes Poststück durch Drehen der angetriebenen Rolle nach unten in einen Behälter eines Verteilförderers abgegeben werden. Bei dieser Vorrichtung wird als nachteilig angesehen, dass empfindliche Güter, wie beispielsweise Brillengläser oder Compact-Discs durch den Druck der beiden Rollen beschädigt werden können.

Der Erfindung liegt die Aufgabe zugrunde, eine Vorrichtung der genannten Art zu schaffen, die eine schonendere Behandlung der zu fördernden flachen Produkten gewährleistet und die sich insbesondere zum Fördern von Poststücken eignet. Die Vorrichtung soll insbesondere Poststücke unterschiedlicher Dicke, Oberfläche und Masse gleichermassen präzis in einen vorbestimmten Behälter eines Verteilförderers abgeben.

Die Aufgabe ist bei einer gattungsgemässen Vorrichtung dadurch gelöst, dass die Ablagefläche durch ein Fenster eines endlosen, zwischen Ruhepositionen bewegbaren Rippenbandes gebildet ist. Mit der erfindungsgemässen Vorrichtung können die flachen Produkte in ein Fenster des Rippenbandes eingelegt und in diesem vorzugsweise schräg nach unten in einen vorbestimmten Behälter des Verteilförderers abgeworfen werden. Das Produkt liegt lediglich vorne oder hinten an einer Rippe des Bandes an und wird in keiner Weise geklemmt. Die Förderung des Bandes ist im wesentlichen unanbhängig von der Dicke des Produktes, seiner Oberfläche und seinem Gewicht. Die erfindungsgemässe Vorrichtung ermöglicht durch eine genaue Positionierbarkeit der Rippen eine sehr präzise Abgabe und dadurch eine hohe Leistung. Da sehr unterschiedliche Poststücke behandelt werden können, müssen diese weniger genau als bisher vorsortiert werden. Versuche haben gezeigt, dass mit der erfindungsgemässen Vorrichtung mindestens drei Poststücke pro Sekunde gefördert werden können. Schliesslich zeichnet sich die erfindungsgemäßse Vorrichtung durch einen sehr einfachen Aufbau und wenige Einzelteile aus.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung erläutert. Es zeigen:
- Fig. 1: Eine Seitenansicht einer erfindungsgemässen Vorrichtung sowie eine Teilansicht eines Verteilförderers,
- Fig. 2: eine teilweise geschnittene Draufsicht auf die Vorrichtung gemäss Figur 1,
- Fig. 3: schematisch den Bewegungsablauf eines Poststückes im Bereich der erfindungsgemässen Vorrichtung,
- Fig. 4 bis 6: schematisch die Abgabe eines Produktes an den Verteilförderer, und
- Fig. 7: die Laufgeschwindigkeit des Rippenbandes in Abhängigkeit von der Zeit.

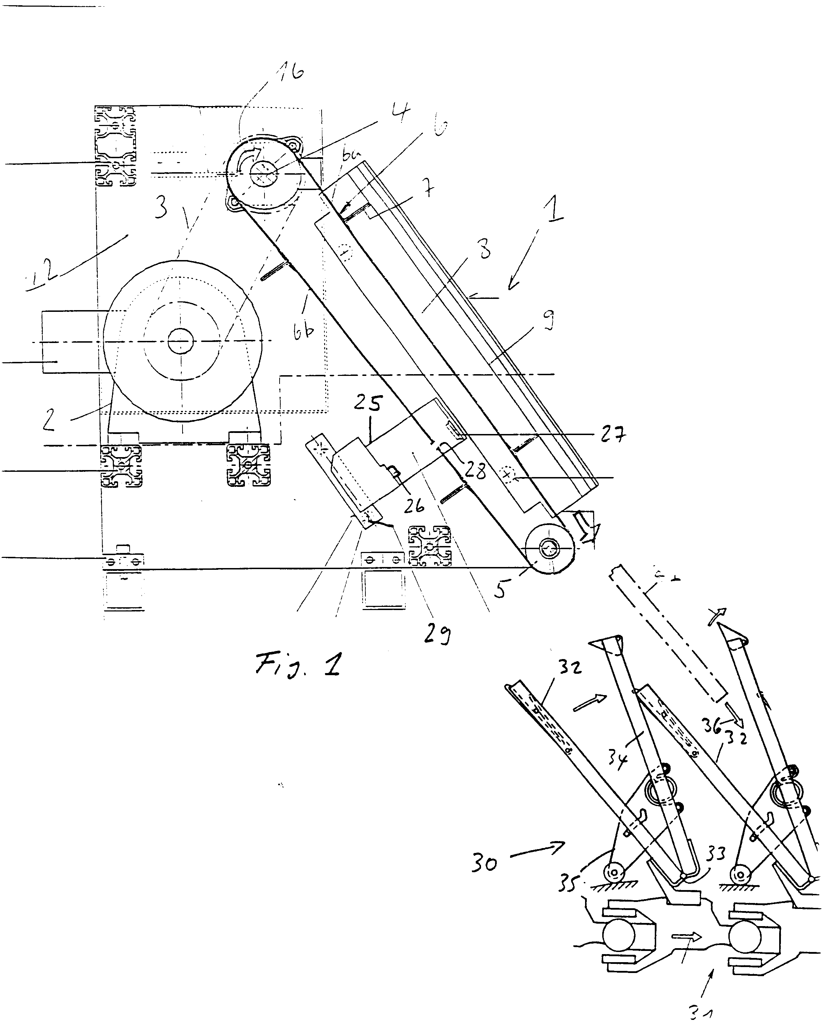

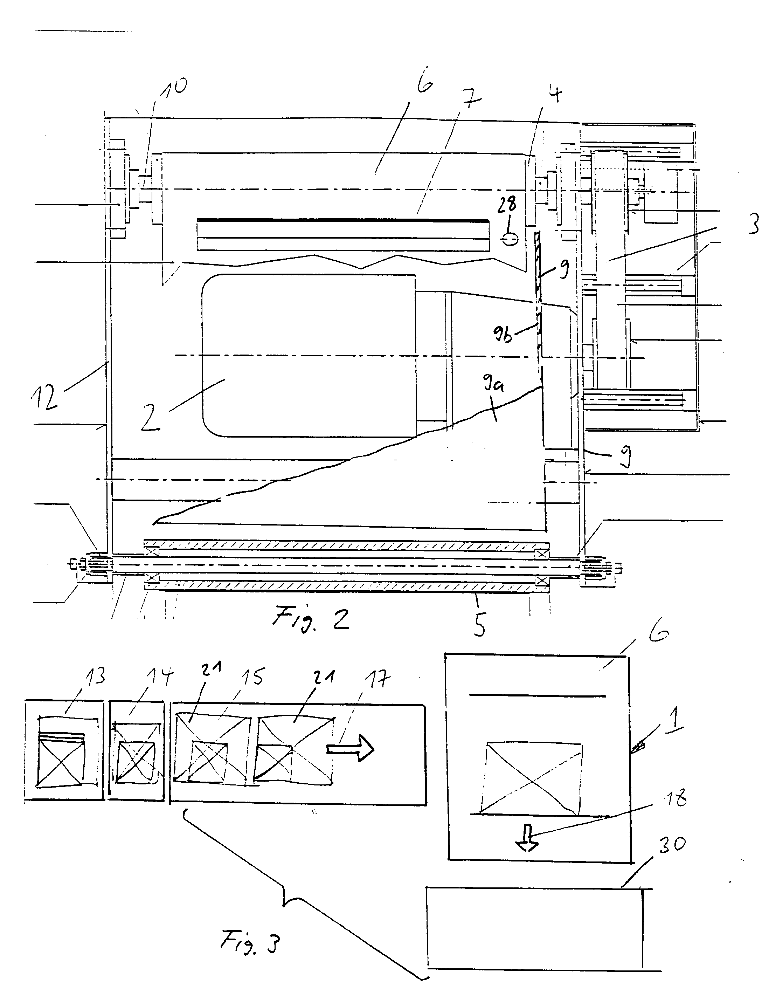

Die Vorrichtung 1 weist gemäss den Figuren 1 und 2 ein Gestell 12 auf, an dem eine Bandantriebsrolle 4 und eine Umlenkrolle 5 drehbar gelagert sind. Die Antriebsrolle 4 ist über ein Antriebsorgan 3 mit einem auf dem Gestell 12 befestigten steuerbaren Motor 2 verbunden. Über die beiden Rollen 4 und 5 ist ein endloses Rippenband 6 mit vier vertikal abstehenden Rippen 7 und entsprechend vier Fenstern 8 gelegt.

Zur Steuerung der Position der Rippen weist das Band 6 wenigstens eine Öffnung 28 auf, auf die eine Lichtschranke 25 anspricht, welche an einem gestellfesten Halter 29 angebracht ist. Die Lichtschranke 25 weist in üblicher Weise eine Lichtquelle 26 und einen Reflektor auf, die beim Durchgang einer Öffnung 28 durch die Lichtschranke einen Impuls abgeben. Die Lichtschranke 25 kann durch ein anderes ähnlich wirkendes Mittel, beispielsweise durch magnetisch arbeitende Mittel ersetzt sein.

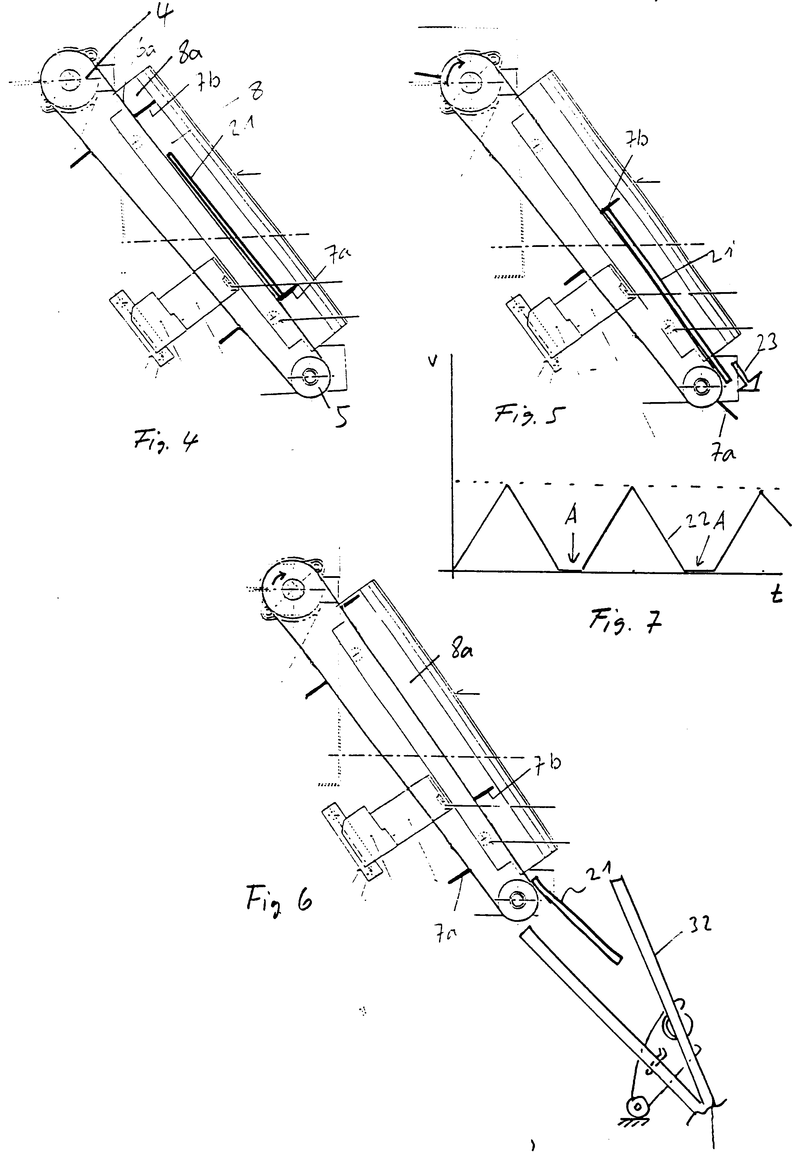

Die Rippen 7 erstrecken sich gemäss Figur 2 im wesentlichen über die gesamte Breite des Bandes 6. Seitlich neben dem Band 6 ist ein Blech 9 gestellfest angebracht, das eine seitliche Wandung 9b als Seitenanschlag sowie eine den oberen Trum 6a des Bandes 6 im Abstand überdeckende Führungswand 9a aufweist. Ein sich unter dem Blech 9 befindliches Fenster 8 bildet somit mit dem Blech 9 einen seitlich offenen Schacht 40 (Fig. 1). In der Ansicht gemäss Figur 2 befindet sich die Öffnung des Schachtes 40 links, von wo gemäss Fig. 3 die Produkte 21 jeweils in einen Schacht 40 eingelegt werden.

Bei der bevorzugten Verwendung der Vorrichtung 1 in einer Postsortieranlage befindet sich in Förderrichtung gesehen vor der Vorrichtung 1 gemäss Figur 3 beispielsweise ein Anleger 13, ein Leser 14 und ein Zuführband 15. Auf dem Zuführband 15 sind die flachen Produkte 21 vereinzelt und können seitlich in ein Fenster 8 und somit zwischen zwei benachbarte Rippen 7 des Bandes 6 gelegt werden. In Figur 3 zeigt der Pfeil 17 die Richtung an, in welcher die Produkte 21 auf das Band 6 geworfen werden. Das Blech 9 bildet mit einer oberen Wandung 9a eine Führung und mit der Seitenwand 9b einen Anschlag für ein einzulegendes Produkt 21. In Förderrichtung gesehen nach der Vorrichtung 1 ist ein Verteilförderer 30 angeordnet, der an einem umlaufend angetriebenen Zugorgan 31 eine Mehrzahl von hintereinander angeordneten Behältern 32 aufweist, die zur Aufnahme jeweils eines Produktes 21 unterhalb der Vorrichtung aufklappbar sind. Ein solcher Verteilförderer ist Gegenstand der schweizerischen Patentanmeldung Nr. 01 962/94. Der Verteilförderer 30 kann jeoch auch ein anderer bekannter Verteilförderer sein. Die in Figur 1 gezeigten Behälter 32 weisen jeweils eine um eine Schwenkachse 33 mittels eines Verriegelungs- und Steuerelementes 35 verschwenkbare Seitenwand 34 auf. Die Seitenwand 34 wird in Laufrichtung gesehen unmittelbar vor der Vorrichtung 1 so verschenkt, dass ein von der Vorrichtung 1 schräg nach unten abgeworfenes Produkt 21 in Richtung des Pfeiles 36 in den Behhälter 32 abgelegt werden kann. Für einen störungsfreien Transport ist es wesentlich, dass die Produkte 21 genau rechtzeitig und getaktet zum Verteilförderer 30 von der Vorrichtung 1 abgworfen werden. In der Regel sind einem Verteilförderer 30 mehrere Vorrichtung 1 zugeordnet. Vorzugsweise werden dann die Vorrichtungen 1 abwechslungsweise von links oder von rechts beschickt. Das Zuführband 15 befindet sich dann in der Ansicht gemäss Figur 3 in den einen Fällen rechts der Vorrichtung 1 und die Seitenwand 9b dann entsprechend links. Bei der erfindungemässen Vorrichtung 1 ist somit ohne weiteres eine Beschickung von links oder rechts möglich.

Anhand der Figuren 4 bis 7 wird nachfolgend die Steuerung des Bandes 6 näher erläutert. Zum Beschicken der Vorrichtung 1 mit einem Produkt 21 ist das Band 6 in der in der Figur 4 gezeigten Position. In dieser befindet sich ein Fenster 8 des Trums 6a etwa mittig zwischen den Rollen 4 und 5. Zum Einlegen eines Produktes 21 in das Fenster 8 wird das Band 6 in der in Figur 4 gezeigten Position kurz angehalten. Dies entspricht in der Darstellung gemäss Figur 7 einer der Positionen A. Ist das Produkt 21 in das Fenster 8 eingelegt, so wird das Band 6 Beschleunigt, so dass das Produkt 21 gemäss Figur 5 in Richtung des Pfeiles 23 nach unten bewegt wird. In der Regel wird ein Produkt 21 hierbei durch eine Rippe 7b nach unten gestossen. Befindet sich die Rippe 7b etwa in der in Figur 6 gzeigten Position, so wird die Bewegung des Bandes 6 verlangsamt und die in Figur 4 gezeigte Ruhestellung angesteuert, so dass in das nachfolgende nunmehr positionierte Fenster 8a ein nächstes Produkt 21 eingelgt werden kann. Die Figur 7 zeigt schematisch, wie das abgeworfene Produkt 21 die Vorrichtung 1 nach unten verlässt und in den in Figur 6 nach rechts bewegenden Behälter 32 geworfen wird.

Trotz der erheblichen Vorteile der erfindungsgemässen Vorrichtung ist diese ersichtlich mit verhältnismässig wenigen, einfachen und robusten Bauteilen realisierbar. Erfindungsgemäss wurde somit eine Vorrichtung geschaffen, welche nicht nur den fördertechnischen Anforderungen in hervorragender Weise Rechnung trägt, sondern aufgrund ihrer einfachen und robusten Ausführbarkeit kostenmässig günstig und betrieblich äusserst zuverlässig ist.

## Patentansprüche

1. Vorrichtung zum Beschicken der Behälter eines Verteilförderers (30) mit flachen Produkten (21), insbeondere Poststücken, mit einer vorzugsweise geneigten Ablagefläche und Mitteln um ein auf diese gelegtes Produkt (21) getaktet in einen Behälter (32) zu fördern, dadurch gekennzeichnet, dass die Ablagefläche durch ein Fenster (8) eines endlosen, zwischen Ruhepositionen bewegbares Rippenband (6) gebildet ist.

2. Vorrichtung nach Anspruch 1, dadurch gekennzeichnet, dass das Rippenband (6) so angeordnet ist, dass ein Produkt (21) quer zur Laufrichtung des Rippenbandes in ein Fenster (8) einwerfbar ist.

3. Vorrichtung nach Anspruch 1 oder 2, dadurch gekennzeichnet, dass seitlich neben einem Fenster (8) ein Seitenanschlag (9b) angeordnet ist.

4. Vorrichtung nach einem der Ansprüche 1 bis 3, dadurch gekennzeichnet, dass über einem Fenster (8) Führungsmittel (9a) angordnet sind.

5. Vorrichtung nach einem der Ansprüche 1 bis 4, dadurch gekennzeichnet, dass wenigstens ein oberer Trum (6a) des Bandes (6) geneigt angeordnet ist.

6. Vorrichtung nach einem der Ansprüche 1 bis 5, dadurch gekennzeichnet, dass in einer Position des Rippenbandes (6) wenigstens ein Fenster (8) des Rippenbandes (6) mit einer Abdeckung (9) einen seitlich offenen Schacht (40) bildet, in den ein Produkt (21) einlegbar ist.

7. Vorrichtung nach Anspruch 6, dadurch gekennzeichnet, dass die Abdeckung (9) eine obere Wandung (9a) aufweist, die für ein einzulegendes Produkt (21) eine Führung bildet.

8. Vorrichtung nach Anspruch 6 oder 7, dadurch gekennzeichnet, dass die Abdeckung (9) eine Seitenwandung (9b) aufweist, die für ein einzulegendes Produkt (21) einen seitlichen Anschlag bildet.
